# EUROPÄISCHE PATENTSCHRIFT

(11) **EP 2 756 227 B1**
(45) Veröffentlichungstag und Bekanntmachung des Hinweises auf die Patenterteilung: **19.04.2017**
(21) Anmeldenummer: 12758859.8
(22) Anmeldetag: 13.09.2012
(51) Int. Cl.: F22B 1/00, F22B 35/10, F22B 35/18, F24J 2/14, F24J 2/46

(54) **VERFAHREN ZUR STEUERUNG EINES SOLARTHERMISCHEN KRAFTWERKS MIT DIREKTVERDAMPFUNG**
METHOD FOR CONTROLLING A SOLAR-THERMAL POWER PLANT HAVING DIRECT VAPORIZATION
PROCÉDÉ POUR COMMANDER UNE CENTRALE HÉLIOTHERMIQUE À ÉVAPORATION DIRECTE

(30) Priorität: 14.09.2011 DE 102011082711
(43) Veröffentlichungstag der Anmeldung: 23.07.2014
(73) Patentinhaber: Solarlite CSP Technology GmbH, 17179 Duckwitz (DE)
(72) Erfinder: KRÜGER, Joachim, 17179 Behren-Lübchin (DE)
(74) Vertreter: dompatent von Kreisler Selting Werner - Partnerschaft von Patent- und Rechtsanwälten mbB
(86) Internationale Anmeldenummer: PCT/EP2012/067987
(87) Internationale Veröffentlichungsnummer: WO 2013/037909

(56) Entgegenhaltungen:
- WO-A1-2005/066553
- US-A1- 2005 126 560
- US-A1- 2009 223 510
- THOMAS A: "Solar steam generating systems using parabolic trough concentrators", ENERGY CONVERSION AND MANAGEMENT, ELSEVIER SCIENCE PUBLISHERS, OXFORD, GB, Bd. 37, Nr. 2, 1. Februar 1996 (1996-02-01), Seiten 215-245, XP004039833, ISSN: 0196-8904, DOI: 10.1016/0196-8904(95)00162-7

## Beschreibung

Die vorliegende Erfindung betrifft ein Verfahren zur Steuerung eines solarthermischen Kraftwerks mit Direktverdampfung.

Solarthermische Kraftwerke mit Direktverdampfung nutzen Sonnenenergie, um ein Arbeitsmedium zu verdampfen, das zum Antreiben einer Turbine verwendet wird.

Somit wird, anders als bei herkömmlichen solarthermischen Kraftwerken, bei denen ein Wärmeträgermedium erhitzt wird, das durch einen Wärmetauscher zur Verdampfung des Arbeitsmediums, beispielsweise Wasser, geführt wird, das Arbeitsmedium direkt in den Parabolrinnenkollektoren des solarthermischen Kraftwerks verdampft und überhitzt. Solarthermische Kraftwerke mit Direktverdampfung weisen dafür eine erste Anzahl von Parabolrinnenkollektoren, die als Verdampfer dienen und eine zweite Anzahl von Parabolrinnenkollektoren, die als Überhitzer eingesetzt werden, auf. Das Arbeitsmedium wird im Betrieb durch Kollektorrohre der Parabolrinnenkollektoren des Verdampfers geleitet und in diesem verdampft. Die Parabolrinnenkollektoren sind zumeist parallel angeordnet, so dass das verdampfte Arbeitsmedium in einer gemeinsamen Sammelleitung von dem Verdampfer abgeleitet wird. In einem Dampfabscheider wird der Dampf von der flüssigen Phase des Arbeitsmediums getrennt und anschließend in den Überhitzer geleitet. Von dem Überhitzer wird der überhitzte Dampf des Arbeitsmediums in eine Arbeitsmaschine, wie beispielsweise eine Turbine, geleitet.

Moderne solarthermische Kraftwerke werden zumeist mit Hilfe eines astronomischen Algorithmus gesteuert. Über diesen wird anhand der Lagekoordinaten des solarthermischen Kraftwerkes ein Sonnenverlauf bestimmt, so dass die Parabolrinnenkollektoren entsprechend dem berechneten Sonnenstand nachgeführt werden können. Da die Sonneneinstrahlung für alle Parabolrinnenkollektoren im Wesentlichen aus der gleichen Richtung kommt, ist die Sonnenstrahlung bei der gleichen Stellung der Parabolrinnenkollektoren auf das Kollektorrohr fokussiert. Daher werden die Parabolrinnenkollektoren über eine zentrale Steuerung gesteuert, so dass alle Parabolrinnenkollektoren gleichzeitig und parallel dem Sonnenstand nach geführt werden. Ferner erfolgt bei der bekannten Steuerung eine Windmessung und bei Überschreiten einer Windgeschwindigkeit werden alle Parabolrinnenkollektoren zum Schutz in eine Sicherungsstellung gedreht, bei der die Spiegelfläche in Richtung des Bodens gerichtet ist, so dass dieser weitestgehend gegenüber Windeinflüssen geschützt ist.

THOMAS A: "Solar steam generating systems using parabolic trough concentrators", ENERGY CONVERSION AND MANAGEMENT, ELSEVIER SCIENCE PUBLISHERS, OXFORD, GB, Bd. 37, Nr. 2, 1. Februar 1996 (1996-02-01), Seiten 215-245, XP004039833, ISSN: 0196-8904, DOI: 10.1016/0196-8904(95)00162-7 und US 2009/223510 A1 offenbaren im Allgemeinen, dass ein Parabolrinnenkollektor in eine Sicherungsstellung gedreht werden kann.

Insbesondere bei solarthermischen Kraftwerken mit Direktverdampfung ist die bekannte Steuerung problematisch, da eine Regulierung der Dampfmenge und Dampftemperatur nur über eine zugeführte Menge an Arbeitsmedium und eine eventuelle Zwischeneinspritzung erfolgen kann. Bei starker Sonneneinstrahlung und einem geringen Dampfbedarf kann es daher dazu kommen, dass verdampftes Arbeitsmedium ungenutzt an der Turbine zu einem Kondensator vorbeigeführt werden muss. Auch ist die bekannte Steuerung in Abhängigkeit von der Windgeschwindigkeit nicht optimal, da bereits bei relativ geringen Windgeschwindigkeiten, beispielsweise 10 m/sec, alle Kollektoren in die Sicherungsstellung verfahren werden, um zu vermeiden, dass einzelne Parabolrinnenkollektoren beschädigt werden. In dieser Stellung kann dann keine Energie aus der Sonneneinstrahlung gewonnen werden.

Es ist daher die Aufgabe der vorliegenden Erfindung, eine verbesserte Steuerung der Parabolrinnenkollektoren bei solarthermischen Kraftwerken bereitzustellen.

Das erfindungsgemäße Verfahren ist durch den Patentanspruch 1 definiert.

Demnach ist vorgesehen, dass die Antriebe einzelner Parabolrinnenkollektoren neben einer Steuerung in Abhängigkeit von einem vorgegebenen astronomischen Algorithmus zusätzlich in Abhängigkeit der jeweiligen Parabolrinnenkollektortemperatur, des Dampfbedarfs und/oder der Windverhältnisse gesteuert und bei Bedarf einzelne Parabolrinnenkollektoren in eine nicht-fokussierte oder eine Sicherungsstellung gedreht werden.

Das erfindungsgemäße Verfahren sieht somit vor, dass die Antriebe einzelner Parabolrinnenkollektoren separat gesteuert werden und nicht alle Antriebe, wie bei herkömmlichen Steuerungsverfahren vorgesehen, immer gemeinsam gesteuert werden. Dadurch ist eine besonders flexible Steuerung des solarthermischen Kraftwerks möglich. Die separate Steuerung der Antriebe einzelner Parabolrinnenkollektoren ermöglicht beispielsweise, dass bei bestimmten Windverhältnissen, nur einzelne, gefährdete Parabolrinnenkollektoren in eine Sicherungsstellung gedreht werden können, wobei die übrigen Parabolrinnenkollektoren in der Betriebsstellung verbleiben können. Somit kann die Anzahl der jährlichen Betriebsstunden des solarthermischen Kraftwerkes erhöht werden. Auch ermöglicht die erfindungsgemäße Steuerung, dass der erzeugte Dampf in vorteilhafter Weise an den Dampfbedarf angepasst werden kann, da eine zusätzliche Regulierungsmöglichkeit gegeben wird. Bei verringertem Dampfbedarf, beispielsweise bei einer Reduzierung der Turbinenlast, kann durch das Verdrehen einzelner Parabolrinnenkollektoren in eine nicht-fokussierte Stellung die produzierte Dampfmenge reduziert werden. Auch ermöglicht das erfindungsgemäße Verfahren eine Regulierung der Parabolrinnenkollektortemperatur, insbesondere der Temperatur der Kollektorrohre, indem bei Ansteigen der Parabolrinnenkollektortemperatur der jeweilige Parabolrinnenkollektor ebenfalls in eine nicht-fokussierte Stellung gedreht werden kann, so dass einer Überhitzung vorgebeugt werden kann.

Die separate Steuerung ist insbesondere beim Anfahren oder Runterfahren des solarthermischen Kraftwerks von Vorteil. Die einzelnen Parabolrinnen-kollektoren können beispielsweise beim Anfahren systematisch nacheinander fokussiert werden, wodurch eine Verbesserung der anfänglichen Dampfproduktion erreicht werden kann.

Die Erfindung sieht in vorteilhafter Weise vor, dass die Steuerung aller Antriebe zusätzlich in Abhängigkeit der jeweiligen Parabolrinnenkollektortemperatur, des Dampfbedarfs und/oder der Windgeschwindigkeit erfolgt, wobei bei Bedarf einzelne Parabolrinnenkollektoren in eine nicht-fokussierte oder in eine Sicherungsstellung gedreht werden. Das erfindungsgemäße Verfahren sieht somit vor, dass die Antriebe aller Parabolrinnenkollektoren zusätzlich separat gesteuert werden und bei Bedarf die Parabolrinnenkollektoren in eine nicht-fokussierte Stellung oder eine Sicherungsstellung drehen, so dass eine besonders flexible Steuerung des solarthermischen Kraftwerks möglich ist.

Über die in dem erfindungsgemäßen Verfahren zusätzlich verwendeten Steuerungsparameter können Steuerungsbefehle für die Antriebe der Parabolrinnenkollektoren erzeugt werden, die die aus dem astronomischen Algorithmus erzeugten Steuerungsbefehle übersteuern.

Es kann vorgesehen sein, dass bei Überschreiten einer vorgegebenen Parabolrinnenkollektortemperatur, insbesondere einer vorgegebenen Kollektorrohrtemperatur, der jeweilige Parabolrinnenkollektor in eine nicht-fokussierte Stellung gedreht wird. Dadurch kann der jeweilige Parabolrinnenkollektor vor einer Überhitzung geschützt werden, so dass Beschädigungen vermieden werden. Die übrigen Parabolrinnenkollektoren können in der Betriebsstellung verbleiben, so dass der Betrieb des gesamten solarthermischen Kraftwerkes nur geringfügig beeinflusst wird.

Ferner kann vorgesehen sein, dass bei Überschreiten einer ersten Windgeschwindigkeit über einen vorgegebenen Zeitraum die in Windrichtung äußeren Parabolrinnenkollektoren in die Sicherheitsstellung gedreht werden und bei Überschreiten einer zweiten Windgeschwindigkeit über einen vorgegebenen Zeitraum alle Parabolrinnenkollektoren in die Sicherungsstellung gedreht werden. Das erfindungsgemäße Verfahren sieht somit vor, dass zwischen unterschiedlichen Windverhältnissen unterschieden wird. Sofern die Windgeschwindigkeit unterhalb einer ersten vorgegebenen Windgeschwindigkeit verbleibt, wird das solarthermische Kraftwerk normal betrieben. Beim Überschreiten der ersten Windgeschwindigkeit über einen vorgegebenen Zeitraum werden die sich in Windrichtung befindlichen Parabolrinnenkollektoren in die Sicherungsstellung gedreht. Diese Parabolrinnenkollektoren sind meist Parabolrinnenkollektoren der in Windrichtung äußeren Reihe eines Kollektorfeldes. Sofern die Parabolrinnenkollektoren in Schleifen geführt werden, ist es selbstverständlich möglich, dass die beiden äußeren Reihen von Parabolrinnenkollektoren, die eine Schleife bilden, in Sicherungsstellung gedreht werden, so dass die gesamte Schleife außer Betrieb genommen wird.

Bei Überschreiten einer zweiten Windgeschwindigkeit über einen vorgegebenen Zeitraum werden dann alle Parabolrinnenkollektoren in die Sicherungsstellung gedreht und das gesamte solarthermische Kraftwerk geht außer Betrieb.

Zur Bestimmung der Windgeschwindigkeiten können herkömmliche Windmesser dienen. Die entsprechende Steuerung der Antriebe erfolgt erst, wenn die entsprechende Windgeschwindigkeit über einen vorgegebenen Zeitraum vorliegt, um zu vermeiden, dass bereits einzelne Windböen höherer Geschwindigkeit zu einer entsprechenden Steuerung der Parabolrinnenkollektoren führen.

Es kann vorgesehen sein, dass ein Parabolrinnenkollektor in seiner Sicherungsstellung mit der Spiegelfläche zum Boden und zum benachbarten Parabolrinnenkollektor gewandt ist. Mit anderen Worten: Ein Parabolrinnenkollektor weist mit einer Kante der Parabolrinne in Richtung des Bodens und mit der gegenüberliegenden Kante in Richtung eines benachbarten Parabolrinnenkollektors. Eine derartige Stellung hat insbesondere den Vorteil, wenn lediglich die in Windrichtung äußeren Parabolrinnenkollektoren in die Sicherungsstellung gedreht sind, da der in die Sicherungsstellung gedrehte Parabolrinnenkollektor als Windschutz für die übrigen Parabolrinnenkollektoren wirkt. Dabei wird der Wind über die Rückseite des in Sicherungsstellung verdrehten Parabolrinnenkollektors in Art eines Windleitflügels gelenkt.

Es kann auch vorgesehen sein, dass ein Parabolrinnenkollektor in seiner Sicherungsstellung mit seiner Spiegelfläche in Richtung des Windes gedreht ist. Der Wind wird somit entlang der Spiegelfläche abgelenkt und über die benachbarten Kollektoren gelenkt. Welche Sicherungsstellung von Vorteil ist, ist von der Windrichtung und Windgeschwindigkeit abhängig.

In einem Ausführungsbeispiel des erfindungsgemäßen Verfahrens kann vorgesehen sein, dass bei Unterschreiten eines vorgegebenen Dampfbedarfes einzelne Parabolrinnenkollektoren in eine nicht-fokussierte Stellung gedreht werden. Auf diese Weise kann die erzeugte Dampfmenge reduziert werden. Insbesondere kann dabei vorgesehen sein, dass die in eine nicht-fokussierte Stellung gedrehten Parabolrinnenkollektoren in dem Bereich des Verdampfers angeordnet sind.

Die Erfindung kann ferner vorsehen, dass die Steuerung der Antriebe zusätzlich in Abhängigkeit von einer gemessenen direkten Sonnenstrahlung erfolgt. Dadurch kann zusätzlich überprüft werden, ob die direkte Sonnenstrahlung ausreichend für eine Fokussierung auf die Kollektorrohre ist, so dass eine Dampferzeugung erfolgen kann.

Im Folgenden wird die Erfindung unter Bezugnahme auf die nachfolgenden Figuren näher erläutert. Es zeigen:
- Fig. 1: eine schematische Draufsicht auf ein solarthermisches Kraftwerk und
- Fig. 2: eine schematische Seitenansicht eines Parabolrinnenkollektors.

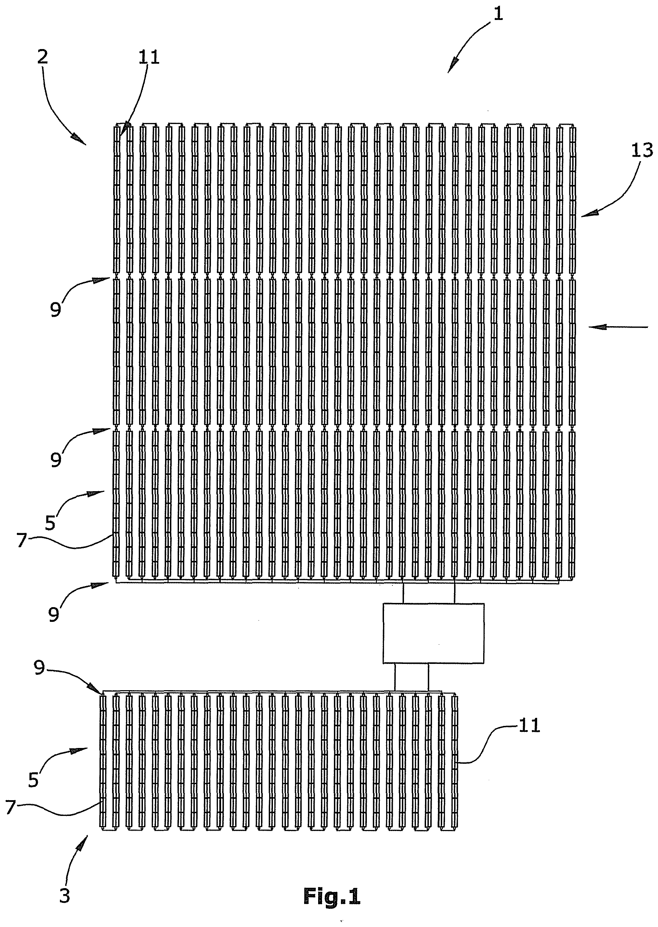

In Fig. 1 ist ein solarthermisches Kraftwerk 1 mit Direktverdampfung schematisch in der Draufsicht gezeigt. Das solarthermische Kraftwerk 1 besteht aus einem Verdampferteil 2 und einem Überhitzerteil 3.

Der Verdampferteil 2 besteht aus mehreren in Schleifen angeordneten Parabolrinnenkollektoren 5. Jede Schleife wird aus sechs Parabolrinnenkollektoren 5 gebildet, wobei die Parabolrinnenkollektoren 5 in zwei Reihen aus jeweils drei Parabolrinnenkollektoren 5 angeordnet sind.

Der Überhitzerteil 3 besteht aus einer Vielzahl von in Schleifen angeordneten Parabolrinnenkollektoren 5, wobei zum Bilden einer Schleife diese aus zwei parallel angeordneten Parabolrinnenkollektoren 5 besteht.

Jeder Parabolrinnenkollektor 5 besteht aus mehreren Parabolrinnensegmenten. In dem Verdampferteil 2 ist der Parabolrinnenkollektor 5 aus zehn Parabolrinnensegmenten 7 gebildet, wohingegen die Parabolrinnenkollektoren 5 des Überhitzerteils 3 aus neun Parabolrinnensegmenten 7 bestehen.

Jeder Parabolrinnenkollektor 5 ist über einen Antrieb 9, beispielsweise einem Hydraulikmotor, drehbar angetrieben, so dass die Parabolrinnenkollektoren 5 im Laufe eines Tages dem Sonnenstand nachgeführt werden können und stets die optimale Sonneneinstrahlung auf den Parabolrinnenkollektor vorliegt. Somit kann das Sonnenlicht auf in den Parabolrinnenkollektoren 5 verlaufende Kollektorrohre 11 fokussiert werden. Der Antrieb 9 kann am Ende eines Parabolrinnenkollektors 5 aber auch in der Mitte zwischen zwei Parabolrinnensegmenten 7 angeordnet sein.

Die Stellungen der Parabolrinnenkollektoren 5 werden gesteuert, indem die Antriebe 9 über eine gemeinsame Steuereinrichtung, einem sogenannten master controller, gesteuert werden. Die Steuereinrichtung umfasst dabei einen astronomischen Algorithmus, der den sich im Tagesverlauf verändernden Sonnenstand berechnet. Dazu wurden in dem Algorithmus die Lagekoordinaten des solarthermischen Kraftwerks 1 hinterlegt.

Durch den astronomischen Algorithmus besteht die Möglichkeit, dass die Parabolrinnenkollektoren 5 automatisch bei Sonnenaufgang in eine Startposition gebracht werden können und bei Sonnenuntergang in eine Sicherungsstellung gedreht werden.

Zusätzlich sieht das erfindungsgemäße Verfahren zur Steuerung des solarthermischen Kraftwerkes 1 vor, dass die Sonneneinstrahlung beispielsweise über eine Wetterstation gemessen wird und nur bei ausreichender Solarenergie das solarthermische Kraftwerk in Betrieb geht oder der Betrieb fortgeführt wird. Eine ausreichende solarthermische Energie liegt vor, wenn für die Sonneneinstrahlung gilt: DNI x cos(θ) ≥ 200 W/m².

Die Antriebe 9 weisen ferner lokale Steuereinrichtungen auf, die im normalen Betrieb mit der zentralen Steuereinrichtung zusammenwirken, über die jedoch auch eine separate Steuerung einzelner Antriebe 9 von Parabolrinnenkollektoren 5 ermöglicht wird.

In dem solarthermischen Kraftwerk 1 wird ein Arbeitsmedium dem Verdampferteil 2 zugeführt und durch die Kollektorrohre 11 geleitet. Durch die auf die Kollektorrohre fokussierte Sonnenstrahlung wird das Arbeitsmedium teilweise verdampft. Nach dem Durchlaufen des Verdampferteils 2 wird das teilverdampfte Arbeitsmedium in einem nicht dargestellten Dampfabscheider separiert und der Dampfteil dem Überhitzerteil 3 zugeführt. Beim Durchlaufen der Kollektorrohre 11 des Überhitzerteils 3 wird der Dampf überhitzt. Das verdampfte Arbeitsmedium wird nach dem Überhitzerteil 3 einer nicht dargestellten Turbine zum Erzeugen von beispielsweise elektrischer Energie zugeführt.

Das erfindungsgemäße Verfahren sieht vor, dass die Antriebe 9 der Parabolrinnenkollektoren 5 zusätzlich in Abhängigkeit der Temperatur des jeweiligen Parabolrinnenkollektors 5, des Dampfbedarfes in der Turbine und/oder in Abhängigkeit von der Windgeschwindigkeit erfolgt. Dabei können bei Bedarf einzelne Parabolrinnenkollektoren in eine nicht-fokussierte Stellung oder in eine Sicherungsstellung gedreht werden.

Somit kann beispielsweise beim Vorliegen einer erhöhten Temperatur eines einzelnen Parabolrinnenkollektors 5 dieser Parabolrinnenkollektor in eine nicht-fokussierte Stellung gedreht werden. Dabei erfolgt die Steuerung, indem die lokale Steuereinrichtung des Antriebs 9 des entsprechenden Parabolrinnenkollektors 5 den entsprechenden Befehl zum Drehen des Parabolrinnenkollektors 5 erhält. Dieser Befehl wird übersteuernd gegenüber den zentralen Steuerungsbefehlen, die in Abhängigkeit des astronomischen Algorithmus erfolgen, ausgeführt.

Dadurch können Beschädigungen durch Überhitzen einzelner Parabolrinnenkollektoren 5 verhindert werden. Sofern die Schleife, in der sich ein Parabolrinnenkollektor 5 mit zu hoher Temperatur befindet, nicht mehr ausreichend Energie zur Verfügung stellen kann, dass beispielweise eine Verdampfung stattfindet, können selbstverständlich auch die Parabolrinnenkollektoren 5 der gesamten Schleife in die nicht-fokussierte Stellung verfahren werden. Selbstverständlich ist es dann notwendig, den Zufluss an Arbeitsmedium in die entsprechende Schleife abzustellen.

Wenn beispielsweise ein verringerter Dampfbedarf an der Turbine vorliegt, können einzelne Schleifen von Parabolrinnenkollektoren 5 in die nicht-fokussierte Stellung gedreht werden und der Zufluss an Arbeitsmedium zu den entsprechenden Schleifen von Parabolrinnenkollektoren 5 abgestellt werden. Dadurch wird insgesamt weniger Dampf erzeugt.
Ferner können über eine Windmessvorrichtung die Windgeschwindigkeiten gemessen werden. Wenn beispielsweise über einen vorgegebenen Zeitraum der Wind eine Windgeschwindigkeit besitzt, die eine erste vorgegebene Windgeschwindigkeit überschreitet, können die in Windrichtung äußeren Parabolrinnenkollektoren 5 in eine Sicherheitsstellung gedreht werden. Die Windrichtung ist in Fig. 1 schematisch mit einem Pfeil gekennzeichnet. Die in der Schleife 13, die sich in Windrichtung befindet, angeordneten Parabolrinnenkollektoren 5 werden nunmehr in die Sicherungsstellung gedreht. Dabei ist es auch notwendig, dass die in der Schleife 13 angeordneten inneren Parabolrinnenkollektoren 5 ebenfalls zumindest in die nicht-fokussierte Stellung gedreht werden. Denn der Arbeitsmediumzufluss zu der äußeren Schleife 13 muss abgeregelt werden, da durch das Drehen der Parabolrinnenkollektoren 5 in die Sicherungsstellung nicht mehr ausreichend Solarenergie in der äußeren Schleife 13 zur Verfügung steht, um das Arbeitsmedium zu verdampfen. Selbstverständlich ist es auch möglich, die inneren Parabolrinnenkollektoren 5 der äußeren Schleife 13 ebenfalls in die Sicherungsstellung zu verdrehen.

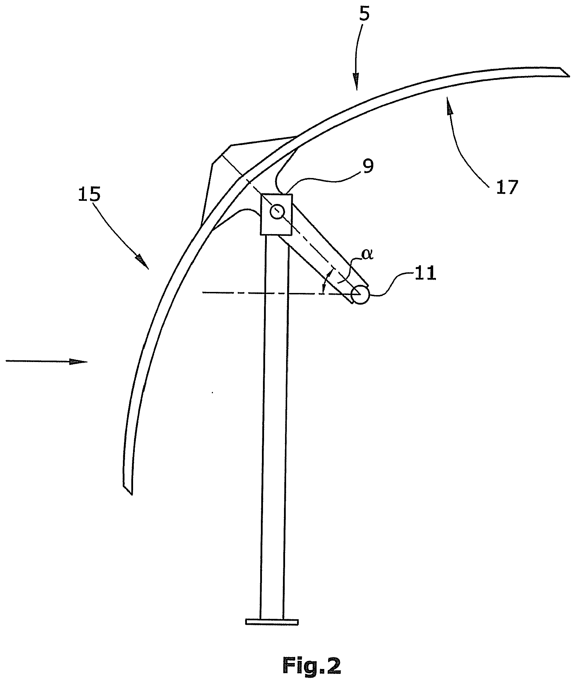

In Fig. 2 ist ein Parabolrinnenkollektor 5 im in die Sicherungsstellung gedrehten Zustand gezeigt. Die Windrichtung ist in Fig. 2 wiederum durch einen Pfeil gekennzeichnet. In der Sicherungsstellung ist der Parabolrinnenkollektor 5 derart angeordnet, dass die Rückseite 15 in Windrichtung zeigt und die Spiegelfläche 17 in Richtung des benachbarten Parabolrinnenkollektors bzw. in Richtung des Bodens zeigt. Dadurch ist die verspiegelte Innenseite 17 sowie das Kollektorrohr 11 gegenüber den Windeinflüssen geschützt. In der Sicherungsstellung kann der Parabolrinnenkollektor 5 derart angeordnet sein, dass die durch das Kollektorrohr 11 verlaufende Flächennormale auf die Spiegelfläche 17 gegenüber der Horizontalen einen Winkel α besitzt, wobei α zwischen 25° und 45°, vorzugsweise 30°, sein kann.

In der Sicherungsstellung wirkt der Parabolrinnenkollektor 5 darüber hinaus als Windleitvorrichtung, so dass der Wind auf der Rückseite des Parabolrinnenkollektors 15 abgelenkt wird und somit nicht auf die benachbarten Parabolrinnenkollektoren trifft.

Wenn der Wind über einen vorgegebenen Zeitraum eine zweite Windgeschwindigkeit überschreitet, kann vorgesehen sein, dass alle Parabolrinnenkollektoren in die Sicherungsstellung gedreht werden. In diesem Zustand ist das solarthermische Kraftwerk 1 außer Betrieb.

Die erste Windgeschwindigkeit kann beispielsweise 7m/sec betragen. Die zweite Windgeschwindigkeit kann beispielsweise 15m/sec betragen. Somit sind bei einer Windgeschwindigkeit von unter 7m/sec alle Parabolrinnenkollektoren 5 in Betrieb, wohingegen bei einer Windgeschwindigkeit über 7m/sec und bis maximal 15m/sec die in Windrichtung äußeren Parabolrinnenkollektoren 5 in die Sicherungsstellung gedreht sind. Beim Überschreiten der Windgeschwindigkeit über 15m/sec sind alle Parabolrinnenkollektoren in die Sicherungsstellung gedreht.

Das erfindungsgemäße Verfahren ermöglicht somit eine besonders vorteilhafte Steuerung eines solarthermischen Kraftwerks 1, wobei Schäden, beispielsweise durch Überhitzung einzelner Parabolrinnenkollektoren 5, vermieden werden. Darüber hinaus kann die produzierte Dampfmenge an den Dampfbedarf angepasst werden.

Auch ermöglicht das erfindungsgemäße Verfahren, dass das solarthermische Kraftwerk 1 noch im Betrieb verbleiben kann, obwohl bereits eine relativ hohe Windgeschwindigkeit vorherrscht, bei der herkömmliche solarthermische Kraftwerke bereits abgeschaltet werden müssten.

Durch das erfindungsgemäße Verfahren werden somit die Betriebsstunden des solarthermischen Kraftwerks deutlich erhöht und darüber hinaus kann das solarthermische Kraftwerk 1 in besonders effizienter Weise betrieben werden.

## Patentansprüche

1. Verfahren zur Steuerung eines solarthermischen Kraftwerks (1) mit Direktverdampfung,
wobei das solarthermische Kraftwerk (1) mehrere Parabolrinnenkollektoren (5) aufweist und jeder Parabolrinnenkollektor (5) einen separaten Antrieb (9) aufweist,
wobei die Antriebe (9) in Abhängigkeit von einem vorgegebenen astronomischen Algorithmus gesteuert werden, und
wobei die Antriebe (9) einzelner Parabolrinnenkollektoren (5) zusätzlich in Abhängigkeit der jeweiligen Parabolrinnenkollektortemperatur und/oder des Dampfbedarfs und/oder der Windverhältnisse separat gesteuert und bei Bedarf einzelne Parabolrinnenkollektoren (5) zur Regulierung der Parabolrinnenkollektortemperatur oder zur Anpassung an den Dampfbedarf in eine nicht-fokussierte Stellung oder bei vorgegebenen Windverhältnissen in eine Sicherungsstellung gedreht werden.

2. Verfahren nach Anspruch 1, **dadurch gekennzeichnet, dass** die Steuerung aller Antriebe (9) der Parabolrinnenkollektoren (5) zusätzlich in Abhängigkeit der jeweiligen Parabolrinnenkollektortemperatur, des Dampfbedarfs und/oder der Windgeschwindigkeit erfolgt, wobei bei Bedarf einzelne Parabolrinnenkollektoren (5) in eine nicht-fokussierte Stellung oder in eine Sicherungsstellung gedreht werden.

3. Verfahren nach Anspruch 1 oder 2, **dadurch gekennzeichnet, dass** bei Überschreiten einer vorgegebenen Parabolrinnenkollektortemperatur der jeweilige Parabolrinnenkollektor in eine nicht-fokussierte Stellung gedreht wird.

4. Verfahren nach einem der Ansprüche 1 bis 3, **dadurch gekennzeichnet, dass** bei Überschreiten einer ersten Windgeschwindigkeit über einen vorgegebenen Zeitraum die in Windrichtung äußeren Parabolrinnenkollektoren (5) in die Sicherungsstellung gedreht werden und dass bei Überschreiten einer zweiten Windgeschwindigkeit über einen vorgegebenen Zeitraum alle Parabolrinnenkollektoren (5) in die Sicherungsstellung gedreht werden.

5. Verfahren nach einem der Ansprüche 1 bis 4, **dadurch gekennzeichnet, dass** ein Parabolrinnenkollektor (5) in seiner Sicherungsstellung mit der Spiegelfläche (17) zum Boden und zu einem benachbarten Parabolrinnenkollektor (5) gewandt ist.

6. Verfahren nach einem der Ansprüche 1 bis 5, **dadurch gekennzeichnet, dass** bei Unterschreiten eines vorgegebenen Dampfbedarfs einzelne Parabolrinnenkollektoren (5) in eine nicht-fokussierte Stellung gedreht werden.

7. Verfahren nach einem der Ansprüche 1 bis 6, **dadurch gekennzeichnet, dass** die Steuerung der Antriebe (9) der Parabolrinnenkollektoren (5) zusätzlich in Abhängigkeit von einer gemessenen direkten Sonneneinstrahlung erfolgt.

## Claims

1. A method for controlling a solar-thermal power plant (1) with direct vaporization,
wherein the solar-thermal power plant (1) comprises a plurality of parabolic trough collectors (5) and each parabolic trough collector (5) comprises a separate drive (9),
wherein said drives (9) are controlled in accordance with a predetermined astronomical algorithm, and
wherein the drives (9) of individual parabolic trough collectors (5) are, in addition, separately controlled in accordance with the respective parabolic trough collector temperature and/or the steam demand and/or the wind conditions and, if required, individual parabolic trough collectors (5) are rotated into non-focused position for regulating the parabolic trough collector temperature or for adaptation to the steam demand, or into a securing position in case of predetermined wind conditions.

2. The method according to claim 1, **characterized in that** the control of all drives (9) of the parabolic trough collectors (5) is additionally performed in accordance with the respective parabolic trough collector temperature, the steam demand and/or the wind speed, wherein, if required, individual parabolic trough collectors (5) are rotated into a non-focused position or into a securing position.

3. The method according to claim 1 or 2, **characterized in that**, when a predetermined parabolic trough collector temperature is exceeded, the respective parabolic trough collector is rotated into a non-focused position.

4. The method according to any one of claims 1 to 3, **characterized in that**, when a predetermined first wind speed is exceeded for a predetermined period of time, the outer parabolic trough collectors (5) as viewed in the wind direction are rotated into the securing position, and that, when a second wind speed is exceeded for a predetermined period of time, all parabolic trough collectors (5) are rotated into the securing position.

5. The method according to any one of claims 1 to 4, **characterized in that** a parabolic trough collector (5), when in its securing position, has its mirror surface (17) facing toward the ground and to an adjacent parabolic trough collector (5).

6. The method according to any one of claims 1 to 5, **characterized in that**, when a predetermined steam demand is underrun, individual parabolic trough collectors (5) are rotated into a non-focused position.

7. The method according to any one of claims 1 to 6, **characterized in that** the control of all drives (9) of the parabolic trough collectors (5) is additionally performed in accordance with a measured direct sun irradiation.

## Revendications

1. Procédé de commande d'une centrale thermique solaire à génération directe de vapeur,
la centrale thermique solaire (1) comportant une pluralité de miroirs cylindro-paraboliques (5) et chaque miroir cylindro-parabolique (5) comportant un entraînement séparé (9),
les entraînements (9) étant commandés en fonction d'un algorithme astronomique prédéterminé, et
les entraînements (9) de miroirs cylindro-paraboliques (5) individuels étant en plus commandés séparément en fonction de la température de chaque miroir cylindro-parabolique et/ou du besoin de vapeur et/ou des conditions de vent et, en cas de besoin, les miroirs cylindro-paraboliques (5) individuels étant tournés dans une position de non-focalisation pour effectuer une régulation de la température des miroirs cylindro-paraboliques ou pour effectuer une adaptation à la demande de vapeur ou, dans des conditions de vent données, dans une position de sécurité.

2. Procédé selon la revendication 1, **caractérisé en ce que** la commande de tous les entraînements (9) des miroirs cylindro-paraboliques (5) est en plus effectuée en fonction de la température de chaque miroir cylindro-parabolique, du besoin de vapeur et/ou de la vitesse du vent, et en cas de besoin, les miroirs cylindro-paraboliques (5) individuels étant tournés dans la position de non focalisation ou dans une position de sécurité.

3. Procédé selon la revendication 1 ou 2, **caractérisé en ce que**, si un miroir cylindro-parabolique dépasse une température prédéterminée, le miroir cylindro-parabolique correspondant est tourné dans une position de non-focalisation.

4. Procédé selon l'une des revendications 1 à 3, **caractérisé en ce que**, si le vent dépasse une première vitesse sur une période prédéterminée, les miroirs cylindro-paraboliques (5) extérieure, par référence à la direction du vent, sont tournés dans la position de sécurité et **en ce que**, si le vent dépasse une seconde vitesse sur une période de temps prédéterminée, tous les miroirs cylindro-paraboliques (5) sont tournés dans la position de sécurité.

5. Procédé selon l'une des revendications 1 à 4, **caractérisé en ce qu'**un miroir cylindro-parabolique (5) est tourné dans sa position de sécurité de telle sorte que sa surface (17) est dirigée vers le sol et vers un miroir cylindro-parabolique (5) adjacent.

6. Procédé selon l'une des revendications 1 à 5, **caractérisé en ce que**, en-dessous d'une demande de vapeur prédéterminée, des miroirs cylindro-paraboliques (5) individuels sont tournés dans une position de non-focalisation.

7. Procédé selon l'une des revendications 1 à 6, **caractérisé en ce que** la commande des entraînements (9) des miroirs cylindro-paraboliques (5) est en plus effectuée en fonction du rayonnement solaire incident direct mesuré.
